# EUROPEAN PATENT SPECIFICATION

(11) **EP 4 184 205 B1**
(45) Date of publication and mention of the grant of the patent: **28.10.2026**
(21) Application number: 21208727.4
(22) Date of filing: 17.11.2021
(51) Int. Cl.: G01S 7/524, G01S 15/931

(54) **METHOD AND DEVICE FOR DETECTING AN OBJECT USING AN ULTRASONIC TRANSDUCER**
VERFAHREN UND VORRICHTUNG ZUR DETEKTION EINES OBJEKTES MITTELS EINES ULTRASCHALLWANDLERS
PROCÉDÉ ET DISPOSITIF POUR DÉTECTER UN OBJET À L'AIDE D'UN TRANSDUCTEUR À ULTRASONS

(43) Date of publication of application: 24.05.2023
(73) Proprietor: Elmos Semiconductor SE, 51379 Leverkusen (DE)
(72) Inventor: SHIH, Ya Shan, 710042 Tainan City (TW)
(74) Representative: Pearl Cohen EU

(56) References cited:
- EP-A1- 2 988 149
- WO-A1-2016/016186
- US-A1- 2004 064 043

## Description

The present invention is directed to a method for detecting an object using an ultrasonic transducer, an integrated circuit configured to carry out the method, and an ultrasonic transducer system comprising the integrated circuit.

Ultrasonic transducers typically comprise a cup-shaped housing having a bottom wall and an essentially cylindrical side wall, which together form a hollow void within the housing. An oscillation generator is attached to an inner side of a bottom wall of the housing and configured to excite oscillations of the bottom wall, which, thus, acts as an oscillation membrane. The cup-shaped housing is typically manufactured as a single piece made of aluminum. The oscillation generator may be attached to the bottom wall by an attachment structure to influence the oscillatory behavior of the ultrasonic transducer. Moreover, ultrasonic transducers are known having an altered bottom wall to adjust the oscillatory behavior of the ultrasonic transducer. Such ultrasonic transducers are described for example in the documents DE 10 2015 015 900 B3, DE 10 2015 015 901 B3 and DE 10 2015 015 903 B3.

Ultrasonic transducers are often used for automotive applications related to a parking assistance system and a distance control and other driver assistance applications.

These applications are typically based on one or more ultrasonic transducers being part of an ultrasonic transducer system and emitting ultrasonic waves, which are at least partly reflected by an object possibly arranged in an area of detection of the respective ultrasonic transducer, and typically received by the same and/or another ultrasonic transducer of the ultrasonic transducer system. An ultrasonic transducer therefore may have the function of an emitter and/or also the function of a receiver, i.e., the ultrasonic transducer may be a transceiver.

Information about a presence and an optional distance of an object in a field of view of the ultrasonic transducer may be extracted based on a runtime and optionally also on an amplitude of the received ultrasonic waves. The runtime may be defined as a duration/timespan from sending/emitting the ultrasonic waves using the ultrasonic transducer until receiving the ultrasonic waves reflected by the object using the same and/or another ultrasonic transducer of the ultrasonic transducer system.

Sensing an object using one ultrasonic transducer typically comprises three stages, a driving stage during which the ultrasonic waves are emitted by the ultrasonic transducer, a damping stage following the driving stage during which the ultrasonic transducer rings down, and an echo/receiving stage following the damping stage during which the transducer acts as a receiver.

More specifically, during the driving stage the oscillation generator of the ultrasonic transducer excites the bottom wall of the ultrasonic transducer such that the ultrasonic waves are emitted, wherein the damping stage is defined as a timespan during which the oscillation generator does not (longer) excite the bottom of the wall, but the bottom of the wall is still oscillating/vibrating such that, due to the piezoelectric effect, the deformation of the transducer generates electrical signals. These signals are much larger than and will sum up with the small electrical signals caused by reflected echoes, and therefore the reflected echoes may not be detected in the damping stage. During the receiving or echo stage, the bottom of the wall of the ultrasonic transducer is excited by the ultrasonic waves reflected by the object in the field of view of the ultrasonic transducer. The excitement caused by the reflected ultrasonic waves may be measured/sensed. Knowing a time of sending the ultrasonic waves and a time of receiving the reflected ultrasonic waves as well as a velocity of the ultrasonic waves, makes it possible to determine a distance of the object reflected the ultrasonic waves to the ultrasonic transducer.

However, since the transducer is still vibrating during the damping stage, it is not possible to sense the reflected ultrasonic waves during the damping stage, i.e., it is not possible to determine if the oscillating of the bottom wall of the ultrasonic transducer is caused by down ringing or by the reflected ultrasonic waves.

This results in a certain timespan during which it is not possible to sense objects using the ultrasonic transducer such that the field of view of the ultrasonic transducer is limited to objects having a certain minimum distance to the ultrasonic transducer. Typically, the minimum distance for so called directly driven ultrasonic transducers is 30 cm, i.e., there is a so-called blind zone/unusable area of 30 cm in front of the ultrasonic transducer.

A method and a device for reducing the blind zone is described in DE 10 2015 012 192 B3 which relates to a device for improving the detection of the presence of objects in the close range of an ultrasonic measurement system. The voltage signal of an ultrasonic transducer for periodically transmitting and receiving ultrasonic bursts having a transmission period is detected. An envelope generation device determines an envelope signal from the voltage signal of the ultrasonic transducer. This comprises a controllable envelope filter. A threshold generator generates a threshold signal. A first comparator compares the threshold signal with the envelope signal and generates a first output signal. A characteristic frequency of the controllable envelope filter, which may be part of the envelope generation device, is changed for at least one period of time in dependence on the first output signal of the first comparator or correlated to a period of time at least one time in a transmission period by a filter controller or a timer or the like. Alternatively or simultaneously, a second comparator can compare the voltage signal of the ultrasonic transducer with a second threshold value. In this case, this second threshold value is selected in comparison to the threshold signal in such a way that the second comparator switches at higher voltage levels of the voltage signal of the ultrasonic transducer than the first comparator. In addition, a timing detecting device determines the timing in a transmission period after the end of active driving of the ultrasonic transducer in the transmission period from which the level of the voltage signal of the ultrasonic transducer is no longer sufficient to invert the second output signal of the second comparator. A timer changes, after at least a third time period and after at least a fourth time period with respect to the time point in the transmission period, the filter characteristic of the envelope filter of the envelope generation device at least twice in the transmission period and/or after at least a third time period quasi-continuously or continuously for a period within the transmission period. Other relevant documents describing ultrasonic transducers are EP2988149, WO2016/016186 and US2004/064043.

Against the background of this prior art, one object of the present invention is, inter alia, to provide a device and a method which are suitable for reducing a blind zone of an ultrasonic transducer, respectively. More specifically, a solution for near field detection using an ultrasonic transducer should be provided.

The object is solved by a method for detecting an object using an ultrasonic transducer.

The method comprises the steps set out in claim 1.

The method may also be called a near field detection method for an object using an ultrasonic transducer. Near field may be defined as a range starting approximately from 5 cm, preferably 10 cm, more preferably 13 cm or 15 cm in front of the ultrasonic transducer.

Conventionally ultrasonic transducers are driven with their resonance frequency because the resonance frequency results in a high energy level for the ultrasonic signal.

More specifically, the resonance frequency is the frequency at which an amplitude of a forced oscillation of the ultrasonic transducer becomes maximum. Therefore, a relatively small exciting force is sufficient to cause oscillations of the ultrasonic transducer of large amplitude, if the frequency of the excitation is or is close to the resonance frequency.

This high energy level is not only advantageously for a maximum range of the ultrasonic transducer, but also for receiving, i.e., sensing, the reflected ultrasonic signal. The reflected ultrasonic signal also excites the ultrasonic transducer, at least partly, with the resonance frequency at which the amplitude of the forced oscillation of the ultrasonic transducer caused by the received ultrasonic waves becomes maximum. Using a filter component, the resonance frequency may be filtered out, i.e., extracted, from the received signal and the resulting component of the ultrasonic signal may be used for detecting the object.

However, due to the maximum amplitude of the forced oscillation of the ultrasonic transducer during the driving stage, also the ring down time/duration of the damping stage of the transducer is comparably long. This results in a comparably large blind zone of the ultrasonic transducer.

By driving the ultrasonic transducer with the harmonic frequency, a duration of the damping stage, i.e., the ring (down) time, can be reduced, while the energy level of the sent/emitted and also received ultrasonic signal can be kept at a suitable stage. Therefore, it is possible to detect objects earlier and thus within a smaller distance to the ultrasonic transducer.

A harmonic (frequency) is a harmonic oscillation whose frequency is substantially an integer multiple of a fundamental frequency, i.e., substantially an integer multiple of the resonance frequency of the ultrasonic transducer. Substantially means that the harmonic frequency of a 1D structure is the integral multiple of the resonance frequency, whereas of 3D structures, like the ultrasonic transducer, the harmonic frequency may slightly deviate from the integer multiple. For example, the resonance frequency of the ultrasonic transducer may be at 50 kHz, and the fourth harmonic frequency may be at 196 kHz. Here, a second, third, fourth and/or fifth harmonic may be used, wherein the resonance frequency of the ultrasonic transducer is the first harmonic.

However, the method is not limited to driving the transducer with solely the harmonic frequency. It is additionally possible to drive the ultrasonic transducer, e.g., alternating, with the resonance frequency and the harmonic frequency.

In the following preferred embodiments of the invention are described in detail.

The method may comprise determining a distance between the object and the ultrasonic transducer based on a timespan between emitting and receiving the ultrasonic signal.

The method may comprise damping the ultrasonic transducer after driving the ultrasonic transducer.

More specifically, ultrasonic transducers are normally driven by so called integrated circuits (IC). In general, two different types of integrated circuits driving the ultrasonic transducer may be distinguished. A first type is an indirect or transformer drive, where the integrated circuit is connected to the ultrasonic transducer via a transformer for driving the ultrasonic transducer. A second type is a direct drive, where the integrated circuit is connected directly to the ultrasonic transducer, i.e., the integrated circuit comprises a H-Bridge replacing the transformer of the indirect drive. To further reduce the blind zone by reducing the duration of the damping stage, it is possible to electrically damp the transducer after the driving stage in the transformer drive. This might not possible be in the direct drive. By (electronically) damping the transducer after the driving stage, the ring don time can be reduced. Thus, by damping the ultrasonic transducer after driving the ultrasonic transducer objects can be detected even earlier and the blind zone is even more reduced.

The method may comprise filtering the received ultrasonic signal to extract at least one predefined frequency, optionally a base frequency of the ultrasonic transducer, from the received ultrasonic signal.

More specifically, since the harmonic frequency of the ultrasonic transducer is substantially the integral multiple of the base resonance frequency, and the received echo is mainly composed of the base resonance frequency, a receiving circuit may be provided which comprises a band pass filter configured to let pass the base resonance frequency thereby increasing a stability of the received ultrasonic signal and filtering/sort out high frequency noises and/or low low noises caused by the environment. Additionally, especially in case of the direct drive, a voltage buffer may be provided before/in front of the band pass filter.

The method may comprise amplifying the received ultrasonic signal using a predefined amplification factor. The received ultrasonic signal may be amplified, and then filtered. Amplifying the received ultrasonic signal may be necessary because the electrical signals caused by the received echo may be relatively small. By amplifying the received ultrasonic signal the received echo may become visible.

More specifically, experiments have shown that the above-described transformer drive provides a higher energy level of the echo than the direct drive. Thus, the required amplification factor for the transformer driven transducer may be less than the one used for the directly driven ultrasonic transducer. The amplification for direct drive may be for example approximately 66 dB. For transformer drive, the amplification may be for example approximately 48 dB.

The filtered and/or amplified ultrasonic signal may be used to determine the distance between the object and the ultrasonic transducer.

Moreover, an integrated circuit configured to detect an object using an ultrasonic transducer is provided. The integrated circuit is configured to drive the ultrasonic transducer to emit an ultrasonic signal, receive the ultrasonic signal (i.e., a voltage corresponding to/caused by the received ultrasonic signal) being reflected by the object using the ultrasonic transducer, and detect the object based on the received ultrasonic signal.

The integrated circuit is characterized by the technical features set out in claim 7.

The integrated circuit may be configured to determine a distance between the object and the ultrasonic transducer based on a timespan between emitting and receiving the ultrasonic signal. Additionally or alternatively, the integrated circuit may be configured to output a signal allowing a control unit to determine the distance between the object and the ultrasonic transducer based on the timespan between emitting and receiving the ultrasonic signal.

That is, the integrated circuit itself may be configured to carry out the distance measuring and output, e.g., using a digital signal, the distance between the transducer and the object. However, it is also possible that the integrated circuit is connected to a control unit, e.g., an electronic control unit (ECU), wherein the control unit is configured to carry out the distance measuring based on the output signal, e.g., a digital signal, of the integrated circuit.

The electronic control unit (ECU), also known as electronic control module (ECM), may be an embedded system in automotive electronics that is configured to control one or more of the electrical systems or subsystems in a vehicle including the ultrasonic transducer system. The electronic control unit may be connected to the integrated circuit. The (optionally monolithic) integrated circuit (also referred to as an IC, a chip, or a microchip) is a set of electronic circuits on at least one (small flat) piece (or "chip") of semiconductor material, optionally silicon. MOSFETs (metal-oxide-semiconductor field-effect transistors) may be integrated into the chip. This results in circuits that are orders of magnitude smaller, faster, and less expensive than those constructed of discrete electronic components. The integrated circuit may receive a control signal from the electronic control unit and/or may be supplied with voltage (energy) from the electronic control unit, may be configured to drive the ultrasonic transducer based on the control signal received from the electronic control unit and/or may be configured to carry out the above described method at least partly and output a respective result of the method via the same or another data line used for receiving the control signal to the electronic control unit.

The integrated circuit may be configured to damp the ultrasonic transducer after driving the ultrasonic transducer.

More specifically, the integrated circuit may be connected to the ultrasonic transducer via a transformer and may be configured to drive the ultrasonic transducer using the transformer. After the driving stage, i.e., after driving the ultrasonic transducer for a predefined duration, the integrated circuit may be configured to electronically damp the vibrations of the ultrasonic transducer using the transformer thereby reducing the ring down time of the ultrasonic transducer.

The integrated circuit may be configured to filter the received ultrasonic signal to extract at least one predefined frequency, optionally a base frequency of the ultrasonic transducer, from the received ultrasonic signal.

That is, the integrated circuit may comprise or may be connected to a band pass filter, optionally provided as a part of the above-described receiving circuit, to extract the at least one predefined frequency. When the ultrasonic transducer is driven with the harmonic frequency, the ultrasonic signal received at the ultrasonic transducer comprises components of the resonance frequency. As described above, these components are very suitably for detecting the object. Thus, the filter may be configured to extract this component, i.e., the resonance frequency, of the received ultrasonic signal.

The integrated circuit may be configured to amplify the received ultrasonic signal using a predefined amplification factor.

That is, the integrated circuit may comprise or may be connected to an amplifier circuit/unit, optionally provided as part of the above-described receiving circuit, to amplify the received ultrasonic signal. The amplifier may be provided before and/or after the filter unit. The amplifier may be connected to an output of the filter and may be configured to amplify the filtered received signal, e.g., amplify the extracted component, for example the resonance frequency, of the received ultrasonic signal
The integrated circuit may be configured to use the filtered and/or amplified received ultrasonic signal to determine and/or to output the signal allowing the control unit to determine the distance between the object and the ultrasonic transducer.

In conclusion, the above-described integrated circuit may be configured to carry out the above-described method for detecting the object using the ultrasonic transducer. Thus, the description given above with respect to the method applies mutatis mutandis to the integrated circuit and vice versa.

Moreover, an ultrasonic transducer system may be provided. The ultrasonic transducer system is characterized by the technical features set out in claim 13.

The integrated circuit may comprise a H-bridge for directly driving the ultrasonic transducer (so called direct drive), or the integrated circuit may be connected via a transformer to the ultrasonic transducer for driving the ultrasonic transducer (so called transformer drive).

The description given above with respect to the method and the integrated circuit applies mutatis mutandis to the ultrasonic transducer system and vice versa.

Moreover, a vehicle, such as a car/automobile, is provided. The vehicle comprises the ultrasonic transducer system and is thus characterized by comprising the above-described integrated circuit and an ultrasonic transducer being connected to the integrated circuit.

The description given above with respect to the method, the integrated circuit and the ultrasonic transducer system applies mutatis mutandis to the vehicle and vice versa.

Furthermore, a computer program and/or computer-readable data carrier may be provided, comprising instructions which, when being executed by a computer, cause the computer to carry out the above-described method at least partly.

The description given above with respect to the method, the integrated circuit, the vehicle and the ultrasonic transducer system applies mutatis mutandis to the computer program and/or computer-readable data carrier and vice versa. Here, the computer may be the electronic control unit and/or the integrated circuit.

In the following a description of an embodiment will be given with respect to figures 1 to 4
- Fig. 1: depicts schematically an ultrasonic transducer system, i.e., a hardware, to be used in a method for detecting an object using an ultrasonic transducer,
- Fig. 2: depicts schematically a receiving circuit of the ultrasonic transducer system,
- Fig. 3: depicts schematically a flowchart of the method for detecting the object using the ultrasonic transducer system of figures 1 and 2, and
- Fig. 4: depicts schematically a vehicle, here an automobile, comprising the ultrasonic transducer system of figures 1 and 2 which is configured to carry out the method of figure 3.

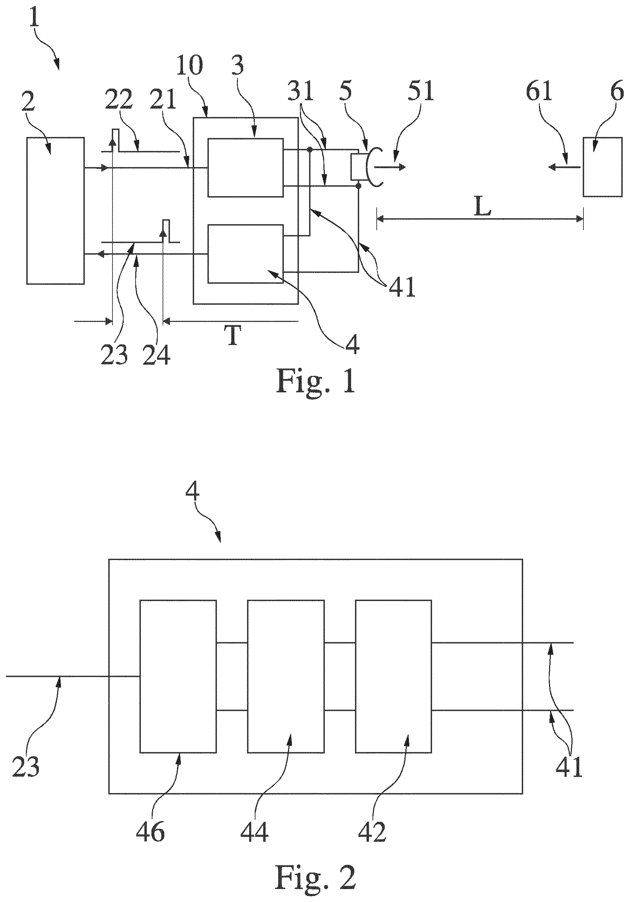

Figure 1 depicts an ultrasonic transducer system 1, which might also be called an ultrasonic sensor system. The ultrasonic transducer system 1 comprises a control circuit 2, a transmission circuit 3, a receiving circuit 4, and an ultrasonic transducer (which might also be called an ultrasonic sensor) 5. Moreover, an object 6 to be detected using the ultrasonic transducer system 1 is shown in figure 1.

The control unit 2 may be an electronic control unit (ECU). An integrated circuit 10 may comprise the transmission circuit 3 and the receiving circuit 4 at least partly. That is, the transmission circuit 3 may be provided completely as a part of the integrated circuit 10 (so called direct drive) or at least parts of the transmission circuit 3 may be provided externally from but connected to the integrated circuit 10, such as a transformer (so called transformer drive). The same applies for the receiving circuit 4, which may be fully integrated into the integrated circuit 10 or may comprise at least some parts provided externally from but connected to the integrated circuit 10. The integrated circuit 10 and the ultrasonic transducer 5 may form part of an ultrasonic module.

The control circuit 2 is connected via an input data line 21 to the integrated circuit 10, more specifically to the pulse transmission circuit 3, and configured to send a burst/transmission control signal 22 to the pulse transmission circuit 3 via the input data line 21. The burst/transmission control signal 22 is a digital signal as can be gathered from figure 1.

The transmission/driving circuit 3 drives the ultrasonic transducer 5 based on/controlled by the control signal 22.

Therefore, the transmission circuit 3 is connected to the ultrasonic transducer 5 via a voltage supply line 31 and configured to drive the ultrasonic transducer 3 by applying a voltage having an oscillating amplitude via the voltage supply line 31 to the ultrasonic transducer 5.

More specifically, the transmission circuit 3 applies the voltage having the oscillating amplitude for a predefined time and with the predefined oscillating amplitude to the voltage supply line 31 when the control signal 22 switches from 0 to 1, i.e., is not pulled to 0 by the control circuit 2 (or the other way round, i.e., when the control signal 22 switches from 1 to 0, i.e., is pulled to 0 by the control circuit 2).

The ultrasonic transducer 5 is configured to emit/send an ultrasonic signal 51, a so-called (ultrasonic) pulse comprising emitted ultrasonic waves, when being driven/activated by the pulse transmission circuit 3, i.e., when the pulse transmission circuit 3 applies the voltage to the ultrasonic transducer 5 via the voltage supply line 31.

The ultrasonic transducer 5 is also configured to receive an ultrasonic signal 61 reflected by an object 6, a so-called (ultrasonic) echo comprising reflected ultrasonic waves, and to apply a voltage to the voltage supply line 31 corresponding to an oscillating amplitude of the received ultrasonic signal 61, i.e., the voltage applied by the ultrasonic transducer 5 to the voltage supply line 31 corresponds to the amplitude changing over time of the received echo 61.

Since the ultrasonic transducer 5 is configured to send and receive ultrasonic signals 51, 61, the ultrasonic transducer 5 is a transducer/transceiver.

The receiving circuit 4 is connected to the voltage supply line 31 via a voltage measuring line 41 and configured to measure the voltage applied to the voltage supply line 31 by the pulse transmission circuit 3 and by the ultrasonic transducer 5.

The principle of ultrasonic distance measuring is based on sending the ultrasonic pulse 51, receive the echo 61 reflected by the object 6 and measure a time T between sending the ultrasonic pulse 51 and receiving the echo 61.

The relationship between the distance L between the transducer 5 and the object 6 and the time T it takes to receive the ultrasonic signal 61 is L = c * T/2, where c is the velocity of sound (c = 343 m/s at 20°C). That is, the time delay T between sending the pulse 51 and receiving the echo 61 (i.e., time of flight) is proportional to the distance L to measure. Therefore, the control circuit 2 is able to calculate the distance L when knowing the time T (and optionally the temperature).

The time T is determined by the control circuit 2. The control circuit 2 determines the time T substantially by determining a difference between a time of sending the control signal 22 (timestamp of sending the control signal 22) and receiving an echo detection signal 24 via an output data line 23 from the receiving circuit 4 (timestamp of receiving the echo detection signal 24).

The receiving circuit 4 determines the echo detection signal 24 by converting an analog signal, i.e., the voltage at the voltage supply line 31, into a digital signal. The receiving circuit 4 is shown in detail in figure 2 and comprises an envelope detector 42, an amplifier 44 and an analog-digital-converter 46.

The amplifier 42 takes the voltage at the voltage supply line 31, which is an (as described above) amplitude modulated signal, as input via the measuring line 41 The amplifier 42 is configured to amplify the voltage with a (analog) gain, and output the amplified voltage to the envelope detector 42.

The envelope detector 44 takes the amplified voltage as input and provides an output signal, which is a demodulated envelope of the amplitude modulated signal.

The analog-digital-converter 46 takes the output signal of the envelope detector 44 as an input and converts the output signal of the envelope detector 44 into a digital signal, i.e., the echo detection signal 24. The analog-digital-converter 46 outputs the echo detection signal 24 via the output data line 23 to the control circuit 2.

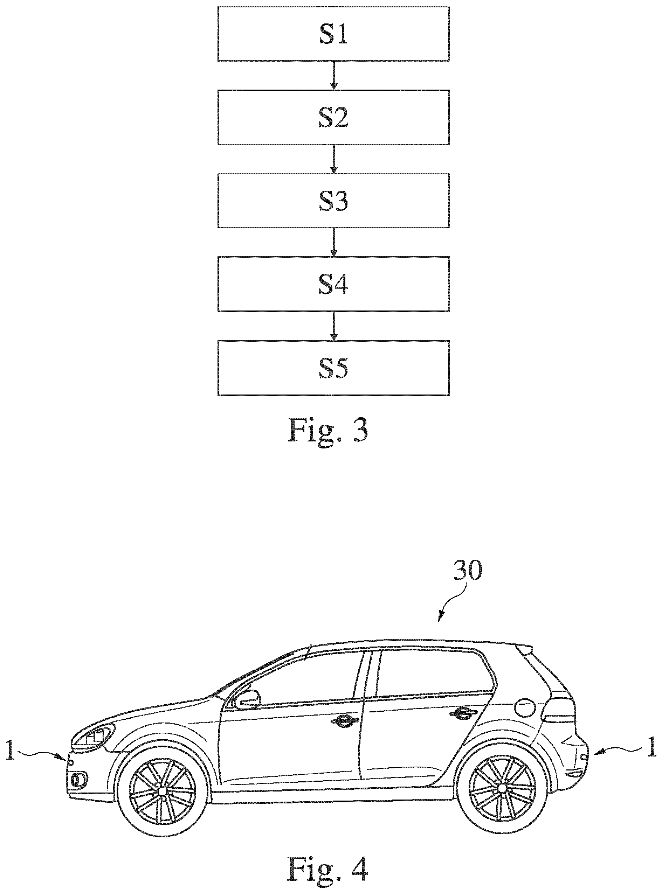

However, a field of view of the ultrasonic transducer system 1 is limited due to a duration of a ring down time of the ultrasonic transducer 5 after being driven by the transmission circuit 3. The method for detecting an object using the ultrasonic transducer 5 deals with an improved detection of objects by means of ultrasonic reflection measuring devices in the close-up range of the measuring devices, e.g., installed in an automobile. This will be explained in further detail below with respect to figures 1 to 3, wherein figure 3 shows a flowchart of the method.

In a first step of the method S1, the ultrasonic transducer 5 is driven by means of the transmission circuit 3 which drives the ultrasonic transducer 5 to emit the ultrasonic signal 51.

More specifically, an alternating voltage of a predefined frequency (i.e., the voltage having the oscillating amplitude) is applied to the ultrasonic transducer 5 by the transmission circuit (which may also be called driver) 3 so that ultrasonic transducer 5 resonates and emits sound waves in the ultrasonic range, i.e., the ultrasonic signal 51. The ultrasonic transducer 5 is typically periodically driven by the transmission circuit 5 and caused to emit the sound waves. The operation of the ultrasonic transducer 5 is divided into transmission periods, which begin with the transmission of the ultrasonic burst/signal 51 by the ultrasonic transducer 5 and are continued by a decay/damping phase, which is followed by a receiving phase. At the latest with the beginning of the next ultrasonic burst/signal 51, the current transmission period ends, and the next transmission period begins. After the transmission of the ultrasonic burst 51, the ultrasonic transducer 5 should decay as quickly as possible in the damping phase so that it can now serve as a receiver in the receiving phase. However, during the decay/ring down time in which the ultrasonic transducer 5 has not yet decayed, the ultrasonic transducer 5 usually cannot be used for receiving, because the receiving circuit 3 typically cannot distinguish in this dead time/blind zone between the switching off of the transmit excitation of the oscillation and the end of the decay of the ultrasonic transducer 5 whether the oscillation signal of the ultrasonic transducer 5 is due to the decay or is due to receiving the reflected ultrasonic signal 61 by the ultrasonic transducer 5. Typically, ultrasonic transducers 5 have a relatively high quality, which is why they cannot be oscillated at an arbitrary rate, nor can they be attenuated at an arbitrary rate. This problem is explained further in detail in DE 10 2015 012 192 B3.

Therefore, the ultrasonic transducer 5 is driven with a harmonic frequency in the first step S1 of the method. The harmonic frequency allows to emit ultrasonic waves with a suitable high level of energy but reduces the ring down time of the ultrasonic transducer 5. Therefore, the receiving phase/period starts earlier and objects being closer to the ultrasonic transducer 5 can be sensed earlier. Thus, the minimum distance L, in which the object 6 can be sensed by the ultrasonic transducer 5, is minimized. The method may further comprise damping the ultrasonic transducer 5 after driving the ultrasonic transducer 5 by means of the transmission circuit 3.

In a second step S2 of the method, i.e., during the receiving phase and after the ring down time of the ultrasonic transducer 5, the ultrasonic signal 61 being reflected by the object 6 is received by/using the ultrasonic transducer 5.

In a third step S3 of the method, the object 6, i.e., the presence of the object 6, is detected based on the received ultrasonic signal 61 by means of the receiving circuit 4.

Therefore, the method comprises amplifying the received ultrasonic signal 61 (i.e., the voltage corresponding to the received ultrasonic signal 61) using the amplifier 42, wherein the amplifier 42 amplifies the received ultrasonic signal 61 using a predefined amplification factor/gain. Afterwards, the method comprises filtering the amplified ultrasonic signal 61 by means of the envelope detector 44. The envelope detector 44 comprises a (not shown) filter device being configured to extract, inter alia, the resonance frequency of the ultrasonic transducer 5 (i.e., the envelope detector 42 may extract all the stimulated electrical signals from the ultrasonic transducer 5) from the received ultrasonic signal 61 and to generate an envelope based on the filtered signal. The analog-digital-converter 46 receives the filtered and amplified envelope from the envelope detector 44, converts the envelope to a digital signal and determines (and optionally also digital amplifies the envelope), using a (not shown) signal processor, if the envelope comprises a peak that exceeds a certain threshold, which may be a set/predefined threshold and/or may be a dynamically changing threshold, for a certain timespan, which may be a set/predefined timespan and/or may be a dynamically changing timespan. If the peak of the envelope exceeds the threshold for the certain timespan, the analog-digital-converter 46 outputs the echo detection signal 24 via the output data line 23 to the control circuit 2.

In a fourth step S4 of the method, the distance L between the object 6 and the ultrasonic transducer 5 is determined by means of the control unit 2 based on the timespan T between emitting and receiving the ultrasonic signal 51, 61. Thus, the filtered and amplified received ultrasonic signal 61 is used to determine the distance L between the object 6 and the ultrasonic transducer 5.

In a fifth step S5 of the method, the control unit 2 generates and outputs a control signal to the automobile 30 shown in figure 4, wherein the control signal is generated based on the determined distance and/or presence of the object 6. The control signal may cause the automobile 30 to output an audio and/or visual information to a driver of the automobile 30. Additionally or alternatively, the control signal may control a motion of the automobile 30.

Thus, the above-described method for detecting the object 6 may be used in the automobile 30, as depicted in figure 4. The automobile 30 comprises the above-described ultrasonic transducer system 1 which is configured to carry out the above-described method. At least one ultrasonic transducer system 1 is integrated into the front bumper, the rear bumper and/or on at least one side of the automobile 30, e.g., on at least one of the side mirrors, of the vehicle 30, respectively, and may form part of a parking assistance system of the vehicle 30.

### Reference signs

- 1: ultrasonic transducer system
- 2: control unit
- 21: input data line
- 22: burst/transmission control signal
- 23: output data line
- 24: echo detection signal
- 3: transmission circuit
- 31: voltage supply line
- 4: receiving circuit
- 41: measuring line
- 42: amplifier
- 44: envelope detector
- 46: analog-digital-converter
- 5: ultrasonic transducer
- 51: ultrasonic signal/burst
- 6: object
- 61: reflected and received ultrasonic signal/echo

- 10: integrated circuit

- 30: vehicle

## Claims

1. Method for detecting an object (6) using an ultrasonic transducer (5) configured to be used in a driver assistance application of an automobile, wherein the method comprises:
- driving (S1) the ultrasonic transducer (5) to emit an ultrasonic signal (51),
- receiving (S2) the ultrasonic signal (61) being reflected by the object (6) using the ultrasonic transducer (5), and
- detecting (S3) the object (6) based on the received ultrasonic signal (61),
**characterized in that**
- the ultrasonic transducer (5) is driven with a harmonic frequency.

2. Method according to claim 1, **characterized in that** the method comprises determining (S4) a distance (L) between the object (6) and the ultrasonic transducer (5) based on a timespan (T) between emitting and receiving the ultrasonic signal (51, 61).

3. Method according to claim 1 or 2, **characterized in that** the method comprises damping the ultrasonic transducer (5) after driving the ultrasonic transducer (5).

4. Method according to any of claims 1 to 3, **characterized in that** the method comprises filtering the received ultrasonic signal (61) to extract at least one predefined frequency, optionally a resonance frequency of the ultrasonic transducer (5), from the received ultrasonic signal (61).

5. Method according to anyone of claims 1 to 4, **characterized in that** the method comprises amplifying the received ultrasonic signal (61) using a predefined and/or dynamically changing amplification factor.

6. Method according to claim 4 or 5, when being dependent on claim 2, **characterized in that** the filtered and/or amplified received ultrasonic signal (61) is used to determine the distance (L) between the object (6) and the ultrasonic transducer (5).

7. Integrated circuit (10) being configured to detect an object (6) using an ultrasonic transducer (5) configured to be used in driver assistance application of an automobile, wherein the integrated circuit (10) is further configured to:
- drive the ultrasonic transducer (5) to emit an ultrasonic signal (51),
- receive the ultrasonic signal (61) being reflected by the object (6) using the ultrasonic transducer (5), and
- detect the object (6) based on the received ultrasonic signal (61),
**characterized in that**
- the integrated circuit (10) is configured to drive the ultrasonic transducer (5) with a harmonic frequency.

8. Integrated circuit (10) according to claim 7, **characterized in that** the integrated circuit (10) is configured to determine and/or to output a signal (23) allowing a control unit (2) to determine a distance (L) between the object (6) and the ultrasonic transducer (5) based on a timespan (T) between emitting and receiving the ultrasonic signal (51, 61).

9. Integrated circuit (10) according to claim 7 or 8, **characterized in that** the integrated circuit (10) is configured to damp the ultrasonic transducer (5) after driving the ultrasonic transducer (5).

10. Integrated circuit (10) according to any of claims 7 to 9, **characterized in that** the integrated circuit (10) is configured to filter the received ultrasonic signal (61) to extract at least one predefined frequency, optionally a resonance frequency of the ultrasonic transducer (5), from the received ultrasonic signal (61).

11. Integrated circuit (10) according to any of claims 7 to 10, **characterized in that** the integrated circuit (10) is configured to amplify the received ultrasonic signal (61) using a predefined amplification factor.

12. Integrated circuit (10) according to claim 10 or 11, when being dependent on claim 8, **characterized in that** the integrated circuit (10) is configured to use the filtered and/or amplified received ultrasonic signal (61) to determine and/or to output the signal (23) allowing the control unit (2) to determine the distance (L) between the object (6) and the ultrasonic transducer (5).

13. Ultrasonic transducer system (1) configured to be used in a driver assistance application of an automobile, **characterized in that** the ultrasonic transducer system (1) comprises the integrated circuit (10) according to any of claims 7 to 12 and an ultrasonic transducer (5) being connected to the integrated circuit (10).

14. Ultrasonic transducer system (1) according to claim 13, **characterized in that** the integrated circuit (10) comprises a H-bridge for directly driving the ultrasonic transducer (5), or the integrated circuit (10) is connected via a transformer to the ultrasonic transducer (5) for driving the ultrasonic transducer (5).

15. Automobile (30), **characterized in that** the automobile (30) comprises the ultrasonic transducer system (1) according to claim 13 or 14.

## Patentansprüche

1. Verfahren zum Erfassen eines Objekts (6) unter Verwendung eines Ultraschallwandlers (5), der für den Einsatz in einer Fahrerassistenzanwendung eines Kraftfahrzeugs ausgelegt ist, wobei das Verfahren umfasst :
- Ansteuern (S1) des Ultraschallwandlers (5), um ein Ultraschallsignal (51) auszusenden,
- Empfangen (S2) des vom Objekt (6) reflektierten Ultraschallsignals (61) mithilfe des Ultraschallwandlers (5) und
- Erfassen (S3) des Objekts (6) auf der Grundlage des empfangenen Ultraschallsignals (61),
**dadurch gekennzeichnet, dass**
- der Ultraschallwandler (5) mit einer harmonischen Frequenz angesteuert wird.

2. Verfahren nach Anspruch 1, **dadurch gekennzeichnet, dass** das Verfahren das Bestimmen (S4) einer Entfernung (L) zwischen dem Objekt (6) und dem Ultraschallwandler (5) auf der Grundlage einer Zeitspanne (T) zwischen dem Senden und dem Empfangen des Ultraschallsignals (51, 61) umfasst.

3. Verfahren nach Anspruch 1 oder 2, **dadurch gekennzeichnet, dass** das Verfahren das Abklingenlassen des Ultraschallwandlers (5) nach dem Ansteuern des Ultraschallwandlers (5) umfasst.

4. Verfahren nach einem der Ansprüche 1 bis 3, **dadurch gekennzeichnet, dass** das Verfahren das Filtern des empfangenen Ultraschallsignals (61) umfasst, um mindestens eine vordefinierte Frequenz, gegebenenfalls eine Resonanzfrequenz des Ultraschallwandlers (5), aus dem empfangenen Ultraschallsignal (61) zu extrahieren.

5. Verfahren nach einem der Ansprüche 1 bis 4, **dadurch gekennzeichnet, dass** das Verfahren das Verstärken des empfangenen Ultraschallsignals (61) unter Verwendung eines vordefinierten und/oder dynamisch veränderlichen Verstärkungsfaktors umfasst.

6. Verfahren nach Anspruch 4 oder 5, sofern es auf Anspruch 2 gestützt ist, **dadurch gekennzeichnet, dass** das gefilterte und/oder verstärkte empfangene Ultraschallsignal (61) zur Bestimmung des Abstands (L) zwischen dem Objekt (6) und dem Ultraschallwandler (5) verwendet wird.

7. Integrierte Schaltung (10), die dazu ausgelegt ist, ein Objekt (6) unter Verwendung eines Ultraschallwandlers (5) zu erfassen, der für den Einsatz in einer Fahrerassistenzanwendung eines Kraftfahrzeugs ausgelegt ist, wobei die integrierte Schaltung (10) ferner dazu ausgelegt ist:
- den Ultraschallwandler (5) so anzusteuern, dass er ein Ultraschallsignal (51) aussendet,
- das vom Objekt (6) reflektierte Ultraschallsignal (61) mithilfe des Ultraschallwandlers (5) zu empfangen und
- das Objekt (6) auf der Grundlage des empfangenen Ultraschallsignals (61) zu erkennen,
**dadurch gekennzeichnet, dass**
- die integrierte Schaltung (10) so ausgelegt ist, dass sie den Ultraschallwandler (5) mit einer harmonischen Frequenz ansteuert.

8. Integrierte Schaltung (10) nach Anspruch 7, **dadurch gekennzeichnet, dass** die integrierte Schaltung (10) so konfiguriert ist, dass sie ein Signal (23) ermittelt und/oder ausgibt, das es einer Steuereinheit (2) ermöglicht, einen Abstand (L) zwischen dem Objekt (6) und dem Ultraschallwandler (5) auf der Grundlage einer Zeitspanne (T) zwischen dem Senden und dem Empfangen des Ultraschallsignals (51, 61) zu bestimmen.

9. Integrierte Schaltung (10) nach Anspruch 7 oder 8, **dadurch gekennzeichnet, dass** die integrierte Schaltung (10) so ausgelegt ist, dass sie den Ultraschallwandler (5) nach dessen Ansteuerung dämpft.

10. Integrierte Schaltung (10) nach einem der Ansprüche 7 bis 9, **dadurch gekennzeichnet, dass** die integrierte Schaltung (10) so konfiguriert ist, dass sie das empfangene Ultraschallsignal (61) filtert, um mindestens eine vordefinierte Frequenz, gegebenenfalls eine Resonanzfrequenz des Ultraschallwandlers (5), aus dem empfangenen Ultraschallsignal (61) zu extrahieren.

11. Integrierte Schaltung (10) nach einem der Ansprüche 7 bis 10, **dadurch gekennzeichnet, dass** die integrierte Schaltung (10) so konfiguriert ist, dass sie das empfangene Ultraschallsignal (61) unter Verwendung eines vordefinierten Verstärkungsfaktors verstärkt.

12. Integrierte Schaltung (10) nach Anspruch 10 oder 11, sofern sie auf Anspruch 8 beruht, **dadurch gekennzeichnet, dass** die integrierte Schaltung (10) so konfiguriert ist, dass sie das gefilterte und/oder verstärkte empfangene Ultraschallsignal (61) verwendet, um das Signal (23) zu ermitteln und/oder auszugeben, das es der Steuereinheit (2) ermöglicht, den Abstand (L) zwischen dem Objekt (6) und dem Ultraschallwandler (5) zu bestimmen.

13. Ultraschallwandlersystem (1), das zur Verwendung in einer Fahrerassistenzanwendung eines Kraftfahrzeugs ausgelegt ist, **dadurch gekennzeichnet, dass** das Ultraschallwandlersystem (1) die integrierte Schaltung (10) gemäß einem der Ansprüche 7 bis 12 und einen mit der integrierten Schaltung (10) verbundenen Ultraschallwandler (5) umfasst.

14. Ultraschallwandlersystem (1) nach Anspruch 13, **dadurch gekennzeichnet, dass** die integrierte Schaltung (10) eine H-Brücke zum direkten Ansteuern des Ultraschallwandlers (5) umfasst oder dass die integrierte Schaltung (10) über einen Transformator mit dem Ultraschallwandler (5) verbunden ist, um den Ultraschallwandler (5) anzusteuern.

15. Kraftfahrzeug (30), **dadurch gekennzeichnet, dass** das Kraftfahrzeug (30) das Ultraschallwandlersystem (1) gemäß Anspruch 13 oder 14 umfasst.

## Revendications

1. Procédé de détection d'un objet (6) à l'aide d' d'un transducteur ultrasonique (5) configuré pour être utilisé dans une application d'aide à la conduite d'un véhicule automobile , dans lequel le procédé comprend :
- l'excitation (S1) du transducteur ultrasonique (5) pour qu'il émette un signal ultrasonique (51),
- la réception (S2) du signal ultrasonore (61) réfléchi par l'objet (6) à l'aide du transducteur ultrasonore (5), et
- la détection (S3) de l'objet (6) sur la base du signal ultrasonore reçu (61),
**caractérisé en ce que**
- le transducteur ultrasonique (5) est excité à une fréquence harmonique.

2. Procédé selon la revendication 1, **caractérisé en ce que** le procédé comprend la détermination (S4) d'une distance (L) entre l'objet (6) et le transducteur ultrasonique (5) sur la base d'un intervalle de temps (T) entre l'émission et la réception du signal ultrasonique (51, 61).

3. Procédé selon la revendication 1 ou 2, **caractérisé en ce que** le procédé comprend l'amortissement du transducteur ultrasonique (5) après l'avoir excité.

4. Procédé selon l'une quelconque des revendications 1 à 3, **caractérisé en ce qu'**il comprend le filtrage du signal ultrasonore reçu (61) afin d'extraire au moins une fréquence prédéfinie, éventuellement une fréquence de résonance du transducteur ultrasonore (5), à partir du signal ultrasonore reçu (61).

5. Procédé selon l'une quelconque des revendications 1 à 4, **caractérisé en ce que** le procédé comprend l'amplification du signal ultrasonore reçu (61) à l'aide d'un facteur d'amplification prédéfini et/ou variant dynamiquement.

6. Procédé selon la revendication 4 ou 5, lorsqu'il dépend de la revendication 2, **caractérisé en ce que** le signal ultrasonore reçu (61), filtré et/ou amplifié, est utilisé pour déterminer la distance (L) entre l'objet (6) et le transducteur ultrasonore (5).

7. Circuit intégré (10) configuré pour détecter un objet (6) à l'aide d'un transducteur ultrasonique (5) configuré pour être utilisé dans une application d'aide à la conduite d'un véhicule automobile, dans lequel le circuit intégré (10) est en outre configuré pour :
- commander le transducteur ultrasonique (5) pour qu'il émette un signal ultrasonique (51),
- recevoir le signal ultrasonique (61) réfléchi par l'objet (6) à l'aide du transducteur ultrasonique (5), et
- détecter l'objet (6) sur la base du signal ultrasonique reçu (61),
**caractérisé en ce que**
- le circuit intégré (10) est configuré pour commander le transducteur ultrasonique (5) à une fréquence harmonique.

8. Circuit intégré (10) selon la revendication 7, **caractérisé en ce que** le circuit intégré (10) est configuré pour déterminer et/ou émettre un signal (23) permettant à une unité de commande (2) de déterminer une distance (L) entre l'objet (6) et le transducteur ultrasonique (5) sur la base d'un intervalle de temps (T) entre l'émission et la réception du signal ultrasonique (51, 61).

9. Circuit intégré (10) selon la revendication 7 ou 8, **caractérisé en ce que** le circuit intégré (10) est configuré pour amortir le transducteur ultrasonique (5) après avoir piloté le transducteur ultrasonique (5).

10. Circuit intégré (10) selon l'une quelconque des revendications 7 à 9, **caractérisé en ce que** le circuit intégré (10) est configuré pour filtrer le signal ultrasonore reçu (61) afin d'extraire au moins une fréquence prédéfinie, éventuellement une fréquence de résonance du transducteur ultrasonore (5), à partir du signal ultrasonore reçu (61).

11. Circuit intégré (10) selon l'une quelconque des revendications 7 à 10, **caractérisé en ce que** le circuit intégré (10) est configuré pour amplifier le signal ultrasonore reçu (61) à l'aide d'un facteur d'amplification prédéfini.

12. Circuit intégré (10) selon la revendication 10 ou 11, lorsqu'il dépend de la revendication 8, **caractérisé en ce que** le circuit intégré (10) est configuré pour utiliser le signal ultrasonore reçu (61), filtré et/ou amplifié, afin de déterminer et/ou de fournir en sortie le signal (23) permettant à l'unité de commande (2) de déterminer la distance (L) entre l'objet (6) et le transducteur ultrasonore (5).

13. Système de transducteur à ultrasons (1) configuré pour être utilisé dans une application d'aide à la conduite d'un véhicule automobile, **caractérisé en ce que** le système de transducteur à ultrasons (1) comprend le circuit intégré (10) selon l'une quelconque des revendications 7 à 12 et un transducteur à ultrasons (5) relié au circuit intégré (10).

14. Système de transducteur à ultrasons (1) selon la revendication 13, **caractérisé en ce que** le circuit intégré (10) comprend un pont en H pour commander directement le transducteur à ultrasons (5), ou **en ce que** le circuit intégré (10) est relié au transducteur à ultrasons (5) par l'intermédiaire d'un transformateur afin de commander le transducteur à ultrasons (5).

15. Véhicule automobile (30), **caractérisé en ce que** le véhicule automobile (30) comprend le système de transducteur à ultrasons (1) selon la revendication 13 ou 14.
